# EUROPÄISCHE PATENTSCHRIFT

(11) **EP 3 623 883 B1**
(45) Veröffentlichungstag und Bekanntmachung des Hinweises auf die Patenterteilung: **24.07.2024**
(21) Anmeldenummer: 18194823.3
(22) Anmeldetag: 17.09.2018
(51) Int. Cl.: G05B 19/401, G01B 21/04

(54) **VERFAHREN UND WERKZEUGMASCHINE ZUR BEARBEITUNG VON WERKSTÜCKEN UNBEKANNTER WERKSTÜCKGEOMETRIE**
METHOD AND MACHINE TOOL FOR MACHINING WORKPIECES WITH UNKNOWN WORKPIECE GEOMETRY
PROCÉDÉ ET MACHINE-OUTIL DESTINÉE AU TRAITEMENT DE PIÈCES À USINER DE GÉOMÉTRIE INCONNUE

(43) Veröffentlichungstag der Anmeldung: 18.03.2020
(73) Patentinhaber: Adelbert Haas GmbH, 78647 Trossingen (DE)
(72) Erfinder: REINERT, Marcel, 78549 Spaichingen (DE); KRAUSSE, Martin, 78628 Rottweil (DE)
(74) Vertreter: Westphal, Mussgnug & Partner Patentanwälte mbB

(56) Entgegenhaltungen:
- US-A1- 2002 104 227
- US-A1- 2009 025 463
- US-A1- 2014 012 409
- US-A1- 2015 066 196
- US-A1- 2015 121 710
- US-A1- 2016 327 935
- WECK M ET AL: "LERNPROGRAMMIERUNG VON WERKZEUGMASCHINEN FUR DAS AUTOMATISCHE GUSSPUTZEN", TECHNISCHE RUNDSCHAU, HALLWAG, BERN; CH, DE, vol. 81, no. 20, 19 May 1989 (1989-05-19), pages 70 - 75, 77, XP000045995, ISSN: 1023-0823

## Beschreibung

Bei modernen, computergesteuerten Werkzeugmaschinen wird die Bearbeitung eines Werkstücks in der Regel auf der Basis eines Datensatzes, der die Werkstückgeometrie beschreibt, durchgeführt. Ein solcher Datensatz wird in vielen Fällen schon bei der Konstruktion des herzustellenden Werkstücks, insbesondere wenn diese computerunterstützt erfolgt, erzeugt und kann beispielsweise aus 3D-Modellen, 2D-Konturen oder Zeichnungen gewonnen werden. Im Gegensatz dazu muss in Fällen, in denen solche Daten zunächst nicht vorliegen, erst ein entsprechender Datensatz gewonnen werden. Exemplarische Anwendungsfälle sind beispielsweise die Nachbearbeitung von Stanzwerkzeugen für die Automobilindustrie und die Wiederaufbereitung von Werkstücken aus Luft- und Raumfahrt.

Derzeit ist die übliche Vorgehensweise in solchen Fällen, in einem ersten Bearbeitungsschritt auf einer externen 3D-Messmaschine die Werkstückgeometrie zu erfassen und die Messdaten dann zur Erstellung einer manuell oder auf der Basis von mit einer Joystickführung erfassten besonderen Messpunkten gefertigten 3D-Skizze zu verwenden. Diese Daten werden dann in einem CAD/CAM System zu einem Datensatz aufbereitet, der in die Werkzeugmaschine importiert und von deren Steuerung für die automatisierte Bearbeitung verwendet werden kann, nachdem das Werkstück auf die Werkzeugmaschine umgespannt wurde.

Dieses Verfahren erweist sich aber nicht nur als aufwändig, weil es mehrere Datenverarbeitungsschritte auf unterschiedlichen Systemen erfordert, sondern auch als nicht optimal was seine Präzision angeht, insbesondere weil das Werkstück zwingend umgespannt werden muss und somit seine Lage verändert wird.

Aus der US 2015/121710 A1 und der US 2015/066196 A1 sind jeweils Verfahren zur Bearbeitung von Werkstücken mit unbekannter Werkstückgeometrie mit einer Werkzeugmaschine bekannt, bei denen bei unbekannter Werkstückgeometrie mit einem innerhalb der Werkzeugmaschine vorgesehen Messtaster einen auf einen Tischgestelltes Werkstück durch eine automatische Messung abgetastet wird, um ein Geometriemodell zu erhalten.

Aus der US 2014/012409 A1 und der US 2009/025463 A1 sind jeweils 3D-Messmaschinen zur Erfassung einer Werkstückgeometrie bekannt, bei denen eine Erfassung von Messpunkten mit einer Joystick-Führung zur Produktion eines Datensatzes für eine Werkzeugmaschine verwendet werden.

Die Aufgabe der Erfindung besteht daher darin, ein Verfahren zur Bearbeitung von Werkstücken unbekannter Werkstückgeometrie mit einer Werkzeugmaschine und eine Werkzeugmaschine zur Bearbeitung von Werkstücken unbekannter Werkstückgeometrie bereitzustellen, die den Aufwand bei der Bearbeitung verringern und eine präzisere Bearbeitung des Werkstücks erlauben.

Diese Aufgabe wird gelöst durch ein Verfahren zur Bearbeitung von Werkstücken unbekannter Werkstückgeometrie mit einer Werkzeugmaschine mit den Merkmalen des Patentanspruchs 1 und durch eine Werkzeugmaschine zur Bearbeitung von Werkstücken unbekannter Werkstückgeometrie mit den Merkmalen des Patentanspruchs 8. Vorteilhafte Weiterbildungen der Erfindung sind Gegenstand der abhängigen Ansprüche.

Das erfindungsgemäße Verfahren zur Bearbeitung von Werkstücken mit unbekannter Werkstückgeometrie mit einer Werkzeugmaschine weist die insbesondere bevorzugt in dieser Abfolge, aber nicht notwendigerweise unmittelbar nacheinander durchzuführenden Schritte
- Aufspannen des Werkstücks auf einer Aufspannvorrichtung der Werkzeugmaschine,
- Durchführen eines handgeführten 3D-Linienscans mit einem Messtaster innerhalb der Werkzeugmaschine zur Erfassung der Werkstückgeometrie in einem ersten Datensatz durch eine manuelle Bewegung des Messtasters, bei dem ein Maschinenbediener den Messtaster in die Hand nimmt und ihn in die Richtung des ersten Aufsatzpunktes auslenkt,
- Aufbereiten des ersten Datensatzes zur Kompensation von Fehlern des handgeführten 3D-Linienscans, um einen zweiten Datensatz zu erhalten,
- Verwenden des zweiten Datensatzes für eine 3D-CAD-Flächenerzeugung durch die Werkzeugmaschine zur Erzeugung einer groben Bauteilgeometrie,
- Verwenden der groben Bauteilgeometrie zum Erzeugen von Scanpfaden für einen automatischen 3D-Linienscan,
- Durchführen eines automatischen 3D-Linienscans des Werkstücks mit dem Messtaster innerhalb der Werkzeugmaschine, um einen dritten Datensatz zu erhalten,
- Verwenden des dritten Datensatzes für eine 3D-CAD-Flächenerzeugung durch die Werkzeugmaschine zur Erzeugung einer genauen Bauteilgeometrie, und
- Automatisierte Bearbeitung des Werkstücks durch die Werkzeugmaschine basierend auf der genauen Bauteilgeometrie auf.

Durch das erfindungsgemäße Verfahren kann der gesamte Bearbeitungsprozess auf einer einzigen Maschine durchgeführt werden, was einerseits den Vorteil mit sich bringt, dass insbesondere ein Umspannen des Werkstücks vermieden wird und andererseits konsequent die Notwendigkeit eines Transfers von Daten zwischen unterschiedlichen Systemen und/oder Softwareumgebungen und die damit einhergehende Notwendigkeit zur Herstellung von Kompatibilität der Daten durch geeignete Konversion vermieden wird.

Insbesondere kann auf diese Weise auch erreicht werden, dass die Qualifikationsanforderungen an das Personal, das zur Bearbeitung von Werkstücken mit unbekannter Werkstückgeometrie eingesetzt wird, reduziert werden. Der Bediener muss im Wesentlichen noch den handgeführten 3D-Linienscan durchführen und den zu verwendenden Flächentyp einstellen, um das Ausgangsmodell zu erzeugen.

Alle weiteren Schritte können automatisiert durchgeführt werden. Insbesondere gilt dies auch für die 3D-CAD-Flächenerzeugung, die für einen gegebenen Flächentyp automatisiert erfolgen kann. Entsprechende Module sind beispielsweise ein Bestandteil der Multigrind^{®} Horizon -Maschinensoftware der Anmelderin.

All dies führt zu einer spürbaren Reduktion des Zeit- und Kostenaufwands bei und/oder zu einer Verbesserung der Resultate der Werkstückbearbeitung.

In einer vorteilhaften Weiterbildung des Verfahrens wird eine vor dem Verwenden des dritten Datensatzes zur Erzeugung einer genauen Bauteilgeometrie eine Qualitätsprüfung des dritten Datensatzes und/oder der daraus erzeugten 3D-CAD Fläche vorgenommen und diese werden bei unzureichender Qualität des dritten Datensatzes verbessert. Diese Qualitätsprüfung kann insbesondere automatisiert durchgeführt werden, nachdem die zu erfüllenden Qualitätskriterien definiert wurden. Beispielsweise können Abweichungen zwischen den Messwerten daraufhin überprüft werden, ob sie im Rahmen der zu erwartenden Fehlertoleranz liegen, und es kann ermittelt werden, ob Messpunkte unterhalb der Modellfläche, aus der der dritten Datensatz bestimmt wurde, und somit an physikalisch unsinnigen Positionen liegen.

Eine solche Verbesserung kann einerseits durch eine Aufbereitung des dritten Datensatzes erfolgen und/oder dadurch, dass eine iterative Verbesserung des dritten Datensatzes durchgeführt wird, indem die durch 3D-CAD-Flächenerzeugung des vorliegenden dritten Datensatzes gewonnene Bauteilgeometrie zur Durchführung eines erneuten automatisierten 3D-Scans verwendet wird, mit dem ein verbesserter dritter Datensatz erzeugt wird, der dann einer erneuten Qualitätsprüfung unterzogen werden kann.

Bevorzugt ist, wenn beim Durchführen des handgeführten 3D-Linienscans eine oder mehrere Linien auf dem aufgespannten Werkstück mit dem Messtaster abgefahren werden. Selbst für eine doppelt gekrümmte Fläche reichen 3 solche 3D-Linienscans aus, um auf ihnen basierend mittels 3D-CAD-Flächenerzeugung eine angenäherte Bauteilgeometrie zu erhalten.

Besonders bevorzugt ist es, wenn beim Durchführen des handgeführten 3D-Scans durch eine manuelle Bewegung des Messtasters das Werkstück eine adaptive Nachführung durch die Werkzeugmaschine erfolgt, d.h. dass die relative Position des Werkstücks zum Messtaster durch Änderung der Position der Aufspannvorrichtung und/oder Änderung der Position des an der Werkzeugmaschine angeordneten Messtasters, was insbesondere durch eine Bewegung der Achsen der Werkzeugmaschine möglich ist, geändert wird. Eine vorteilhafte Möglichkeit besteht z.B. darin, den Messtaster auf einer Maschinenbrücke anzuordnen, deren Bewegung die y- und z-Achse und die Bewegung in x-Richtung durch ein Verfahren der Aufspannvorrichtung auf der Werkzeugmaschine zu realisieren.

Diese adaptive Nachführung durch die Werkzeugmaschine erfolgt vorzugsweise dadurch, dass bei dem Führen des Messtasters die Auslenkung des Messtasters in Echtzeit überwacht und zur Regelung der Verfahrgeschwindigkeit verwendet wird. Überraschenderweise führt dies zu qualitativ deutlich besseren Ergebnissen der handgeführten 3D-Linienscans als wenn man die Positionsänderung des Messtasters nutzt, um daraus eine entsprechende Zielposition für das adaptive Nachfahren der Werkzeugmaschine zu ermitteln.

Der Messtaster tastet das Werkstück mit einer Tastkugel ab und liefert Informationen zur jeweils zu einem gegebenen Zeitpunkt aktuellen Position des Mittelpunkts der Tastkugel im Raum. Derartige Messtaster sind nebst zugehöriger Auswertesoftware kommerziell erhältlich. Diese Information gibt aber für sich genommen noch nicht die tatsächliche Werkstückgeometrie wieder, unter anderem weil sich der Kontaktpunkt der Kugel auf der Oberfläche verschiebt. Vorteilhafterweise wird auch eine solche Verschiebung bei der Rekonstruktion des Werkstückmodells aus den Ergebnissen manueller und/oder maschineller Linienscans berücksichtigt.

Durch das adaptive Nachführen des Werkstücks durch die Werkzeugmaschine, das ebenfalls zeitlich nachverfolgt werden kann, gewinnt man die Möglichkeit, die aktuellen Maschinenkoordinaten und die aktuellen Messtasterkoordinaten miteinander zu korrelieren und so die jeweilige Kugelposition im Raum der Maschinenkoordinaten zu ermitteln und dadurch eine geeignete Modelloberfläche aus den Daten zu erstellen.

In einer bevorzugten Weiterbildung wird zum Aufbereiten eines Datensatzes, insbesondere zum Aufbereiten des ersten Datensatzes aus dem handgeführten 3D-Scans zum Erhalten des zweiten Datensatzes, aber auch bei einer iterativen Verbesserung des dritten Datensatzes zur Kompensation von Fehlern eines 3D-Scans eine Glättung, eine Entfernung von fehlerhaften Messwerten, eine Prüfung auf physikalische Plausibilität der Messdaten oder eine Kombination dieser Maßnahmen durchgeführt, was vorzugsweise auch automatisiert erfolgen kann, nachdem die jeweils anzuwendenden Kriterien definiert wurden.

Eine erfindungsgemäße Werkzeugmaschine zur Bearbeitung von Werkstücken unbekannter Werkstückgeometrie weist eine Aufspannvorrichtung für ein Werkstück und mindestens eine durch eine Steuerung angesteuerte Achse zur Bearbeitung eines auf der Aufspannvorrichtung aufgespannten Werkstücks auf. Erfindungswesentlich ist, dass die Werkzeugmaschine einen Messtaster aufweist, der für die Durchführung eines manuellen 3D-Scans des auf der Aufspannvorrichtung aufgespannten Werkstücks durch manuelle Bewegung des Messtasters, und für die Durchführung mindestens eines automatischen, durch die Steuerung gesteuerten Scans eingerichtet ist, wobei die Steuerung zur Durchführung eines Verfahrens programmiert und/oder eingerichtet ist, bei dem zumindest die Schritte

Empfangen eines ersten Datensatzes, der durch Durchführen (20) eines handgeführten 3D-Linienscans mit dem Messtaster innerhalb der Werkzeugmaschine zur Erfassung der Werkstückgeometrie des auf der Aufspanneinrichtung der Werkzeugmaschine aufgespannten Werkstücks erzeugt wird, bei dem ein Maschinenbediener den Messtaster in die Hand nimmt und ihn in die Richtung des ersten Aufsatzpunktes auslenkt,
- Aufbereiten des ersten Datensatzes zur Kompensation von Fehlern des handgeführten 3D-Linienscans, um einen zweiten Datensatz zu erhalten,
- Verwenden des zweiten Datensatzes für eine 3D-CAD-Flächenerzeugung durch die Werkzeugmaschine zur Erzeugung einer groben Bauteilgeometrie,
- Verwenden der groben Bauteilgeometrie zur Durchführung eines automatischen 3D-Linienscans des Werkstücks mit dem Messtaster innerhalb der Werkzeugmaschine, um einen dritten Datensatz zu erhalten,
- Verwenden des dritten Datensatzes für eine 3D-CAD-Flächenerzeugung durch die Werkzeugmaschine zur Erzeugung einer genauen Bauteilgeometrie, und
- Automatisierte Bearbeitung des Werkstücks durch die Werkzeugmaschine basierend auf der genauen Bauteilgeometrie durchgeführt werden.

Besonders bevorzugt ist dabei, wenn die Steuerungsvorrichtung derart programmiert und eingerichtet ist, dass beim Durchführen eines manuellen 3D-Scans mit dem Messtaster eine adaptive Nachführung durch die Werkzeugmaschine erfolgt, d.h. dass die relative Position des Werkstücks zum Messtaster durch Änderung der Position der Aufspannvorrichtung und/oder Änderung der Position des an der Werkzeugmaschine angeordneten Messtasters, was insbesondere durch eine Bewegung der Achsen der Werkzeugmaschine möglich ist, geändert wird. Eine vorteilhafte Möglichkeit besteht z.B. darin, den Messtaster auf einer Maschinenbrücke anzuordnen, deren Bewegung die y- und z-Achse und die Bewegung in x-Richtung durch ein Verfahren der Aufspannvorrichtung auf der Werkzeugmaschine zu realisieren.

Dies geschieht bevorzugt dadurch, dass Mittel zur Überwachung der Position des Messtasters im Raum in Echtzeit vorhanden sind und dass die Steuerungsvorrichtung derart programmiert und eingerichtet ist, dass basierend auf den bei dieser Echtzeitüberwachung gewonnenen Daten die Geschwindigkeit der adaptiven Nachführung geregelt wird.

Die Erfindung wird nachfolgend anhand von Figuren, die Ausführungsbeispiele zeigen, näher erläutert. Es zeigt:
- Fig. 1:: ein Flussdiagramm eines möglichen, exemplarischen Verfahrensablaufs,
- Fig. 2:: eine schematische Veranschaulichung der Beschreibung der Oberflächengeometrie durch eine Kombination von Maschinen- und Messtasterkoordinaten,
- Fig. 3:: ein Beispiel für das Ergebnis eines handgeführten 3D-Linienscans,
- Fig. 4:: den handgeführten 3D-Linienscan gemäß Fig. 3 nach seiner Aufbereitung,
- Fig. 5:: ein aus dem aufbereiteten 3D-Linienscan gemäß Fig. 4 erhaltenes grobes Flächenmodell,
- Fig. 6:: das Ergebnis des unter Verwendung des groben Flächenmodells aus Fig. 5 gewonnenen Scanwegs für den automatischen 3D-Linienscan,
- Fig. 7:: ein grobes Flächenmodell, das abweichend von der Erfindung durch Verwendung nicht aufbereiteter Daten des handgeführten 3D-Scans gemäß Figur 3 gewonnen wurde, und
- Fig. 8:: das Ergebnis eines unter Verwendung des groben Flächenmodells aus Figur 7 erzeugten Scanweg für dem automatischen 3D-Linienscan.

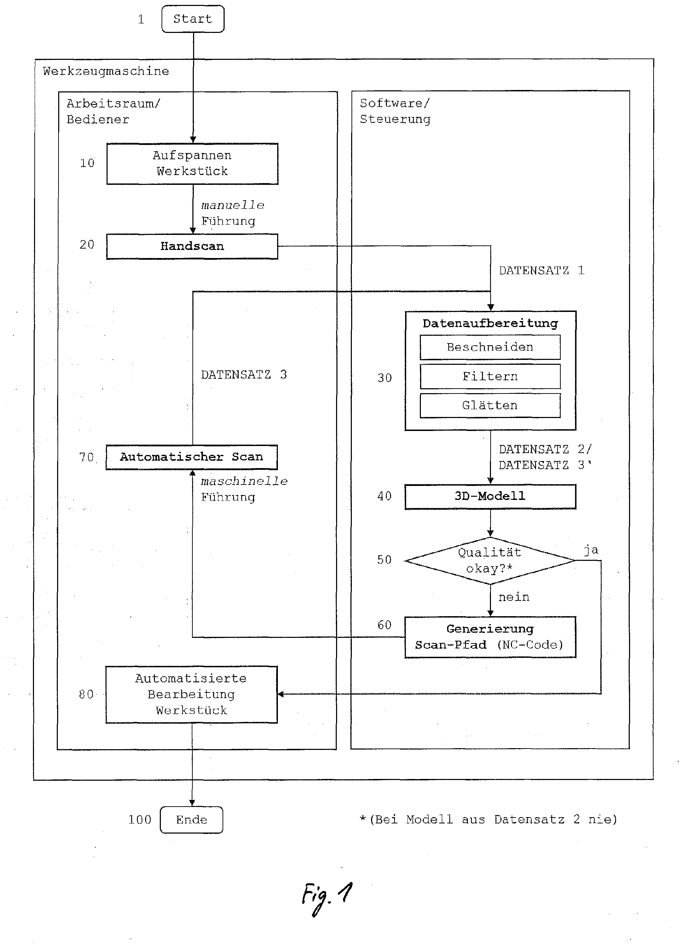

Figur 1 zeigt ein Ablaufschema einer Ausführungsform des erfindungsgemäßen Verfahrens. Dabei gibt die räumliche Anordnung der Verfahrensschritte in Figur 1 wieder, ob es sich um Schritte handelt, die im Bearbeitungsraum der Maschine erfolgen oder um Schritte handelt, die von der Maschinensteuerung durchgeführt werden. Erstere sind auf der linken Seite dargestellt, letztere auf der rechten Seite.

Als Start 1 des Verfahrens wird im Schritt 10 durch einen Maschinenbediener ein Werkstück unbekannter Geometrie, also ein Werkstück, für das noch kein 3D-Modell als Grundlage für eine computergesteuerte Bearbeitung des Werkstücks durch die Werkzeugmaschine vorhanden ist, aufgespannt.

Anschließend wird durch den Maschinenbediener im Schritt 20 mit manueller Führung ein handgeführter 3D-Linienscan durchgeführt. Das bedeutet konkret, dass der Maschinenbediener den Messtaster, der beispielsweise an einer Maschinenbrücke, mit der die Bewegung der y- und z-Achse der Werkzeugmaschine realisiert ist, während eine Bewegung in x-Richtung durch ein Verfahren der Werkstückaufnahme realisiert wird, angeordnet ist, in die Hand nimmt und ihn in die Richtung des ersten Aufsatzpunktes auslenkt.

Durch diese Auslenkbewegung wird im Messtaster ein Satz von Spannungen generiert, die jeweils die Auslenkung in eine gegebene Raumrichtung und somit die Änderung der Lage der Kugel des Messtasters im Raum um eine gewisse Strecke repräsentieren.

Angemerkt sei dabei schon an dieser Stelle, dass bei einer sehr großen Auslenkung des Messtasters die Datenpunkte oft fehlerbehaftet sind, beispielsweise wenn ein Proportionalbereich der generierten Spannung verlassen wird, so dass in diesem Fall der entsprechende Datenpunkt fehlerbehaftet sein kann. Umgekehrt treten auch bei einer sehr kleinen Auslenkung des Messtasters relevante Fehler auf, beispielsweise bedingt durch Spannungserzeugung und -auswertung bei kleinen Spannungen, so dass auch diese Messpunkte mit einer erhöhten Unsicherheit behaftet sind. Es gibt am Markt bereits Messtaster, deren Kontrollsoftware neben den jeweiligen Datenpunkten auch die Information bereit stellt, ob der Datenpunkt in einem Bereich zu großer oder zu kleiner Auslenkung gewonnen wurde.

Um zu einer zuverlässigen Beschreibung der tatsächlichen Werkstückgeometrie durch den 3D-Linienscan zu gelangen, muss man also sicherstellen, dass man den Messtaster möglichst während des gesamten 3D-Linienscans in einem bestimmten Auslenkungsbereich betreibt; dies ist letztlich auch ein Grund, warum erfindungsgemäß zwingend mindestens ein zusätzlicher automatisierter 3D-Linienscan vorgenommen werden muss.

Naturgemäß sind die realisierbaren Auslenkbewegungen des Messtasters beschränkt, weshalb sie bevorzugt dadurch, dass die Werkzeugmaschine beim handgeführten 3D-Linienscan adaptiv nachgeführt wird, im realisierbaren Rahmen gehalten werden. Die adaptive Nachführung bedeutet also, dass beispielsweise der an der Maschinenbrücke angeordnete Messtaster, um einen Punkt unterhalb seiner aktuellen Position zu erreichen, nicht den ganzen Weg bis zu diesem Punkt ausgelenkt, insbesondere herabgezogen werden muss, sondern dass das Herabziehen des Messtasters, also eine Auslenkung in z-Richtung, am Beginn dieser Bewegung dazu führt, dass die Maschinenbrücke sich abzusenken beginnt oder ein Auslenken unter einem Winkel von 45° in der x-y Ebene eine entsprechende Änderung der Position der Maschinenbrücke und/oder der Werkstückaufnahme in dieser Ebene herbeiführt.

Da, wie oben erwähnt, das durch das Herabziehen des Messtasters entstehende Spannungssignal durch den Messtaster bzw. eine Software, mit der er betrieben wird, mit einer definierten Positionsänderung im Raum verbunden werden kann, kann grundsätzlich ein Steuerbefehl zum Vornehmen dieser Positionsänderung an die Maschinensteuerung der Werkzeugmaschine weitergegeben werden, um diese Nachfahren zu realisieren.

Überraschenderweise zeigt sich jedoch, dass die Qualität der 3D-Linienscans dadurch erheblich verbessert werden kann, wenn stattdessen die Maschinensteuerung keine vorgegebene Position anfährt, sondern die entsprechenden Maschinenachsen einen kontinuierlichen Fahrbefehl erhalten, wobei allerdings der Vorschubfaktor, also die Fahrgeschwindigkeit mit der Auslenkung korreliert, im einfachsten Fall durch die aktuelle Auslenkung unmittelbar vorgegeben werden. Dementsprechend würde bei dieser bevorzugten Art der adaptiven Nachführung der Werkzeugmaschine z.B. bei einer reinen Bewegung in der x-y-Ebene unter einem Winkel von 45° an die x- und die y-Achse ein Fahrbefehl mit demselben, von der Auslenkung des Messtasters in der Ebene abhängigen Vorschubfaktor und an die z-Achse ein Fahrbefehl mit dem Vorschubfaktor 0 gegeben. Durch eine Überwachung der Auslenkung des Messtasters wird hier also die Verfahrgeschwindigkeit des adaptiven Nachführens geregelt.

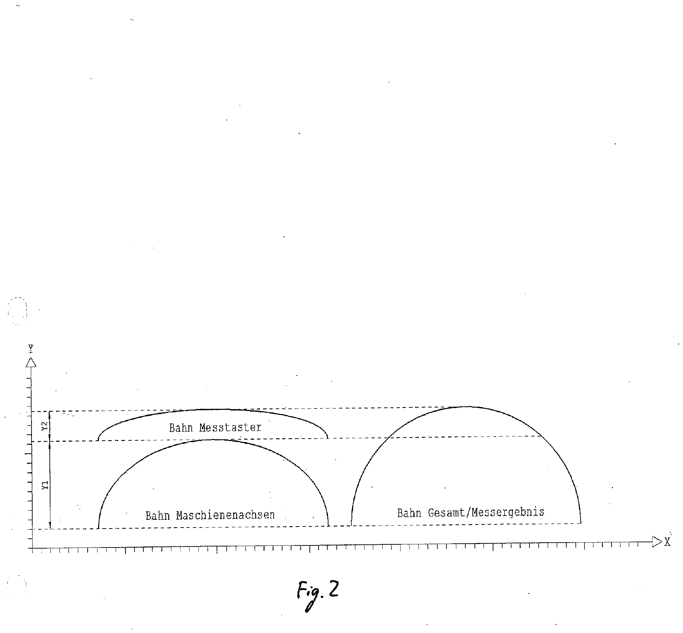

Auf diese Weise wird also durch das händische Führen des Messtasters über das Werkstück sukzessive ein 3D-Linienscan-Datensatz erzeugt, mit dem die Oberflächengeometrie an einem gegebenen Punkt durch die aktuellen Maschinenkoordinaten und die aktuelle Auslenkung des Messtasters beschrieben wird, wie dies schematisch in Figur 2 veranschaulicht ist.

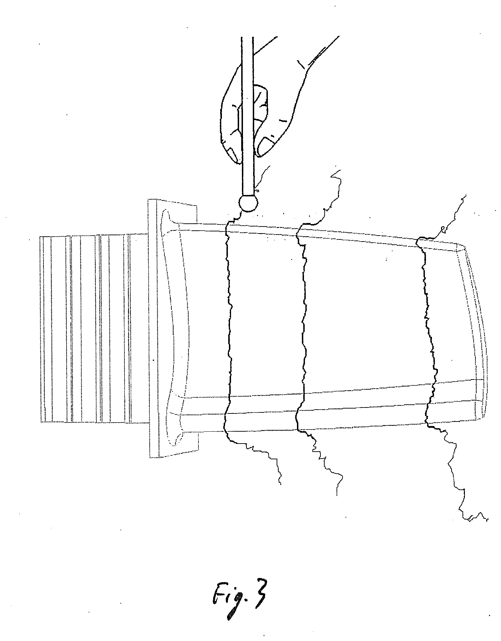

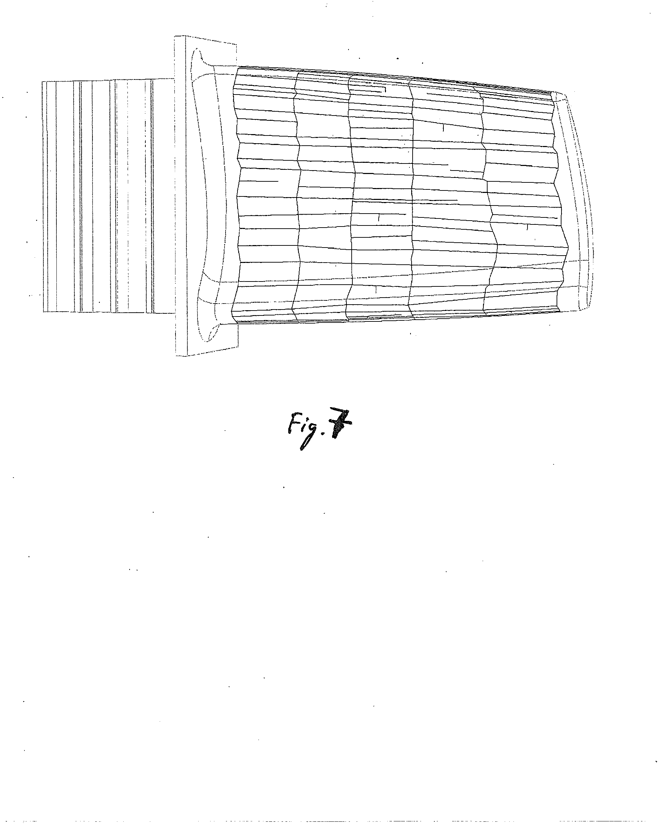

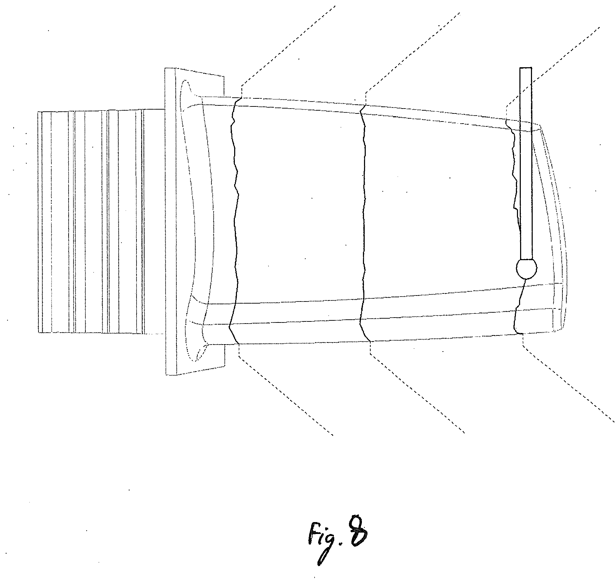

Das Ergebnis eines solchen handgeführten 3D-Linienscans gemäß Schritt 20 des Verfahrens für ein Werkstück mit einer komplexen, doppelt gekrümmten Oberflächengeometrie zeigt die Figur 3. Auf den ersten Blick ist dieses Ergebnis entmutigend, denn eine -abweichend vom erfindungsgemäßen Verfahren- aus diesen Daten mittels der üblichen, kommerziell erhältlichen und beispielsweise als Bestandteil der Multigrind^{®} Horizon -Software der Anmelderin realisierten CAD-Routinen konstruierte Fläche, wie sie in Figur 7 gezeigt ist, weist deutliche Flächenfehler auf und kann erkennbar keine Basis für eine Bearbeitung des Werkstücks sein. Sie taugt auch nicht einmal als Basis für eine weitere Verbesserung mittels eines automatischen Scans, wie das in Figur 8 gezeigte Beispiel demonstriert.

Deswegen wird der durch den Handscan in Schritt 20 erzeugte erste Datensatz erfindungsgemäß im Schritt 30 softwarebasiert, beispielsweise mit einem auf der Maschinensteuerung ausgeführten Programm, anhand vorgegebener Kriterien aufbereitet, um einen zweiten Datensatz zu erzeugen.

Beispielsweise ist es zweckmäßig, die dem Aufsetzen des Messtasters auf das Werkstück zuzuordnenden Messpunkte herauszuschneiden. Die handgeführten 3D-Linienscandaten spiegeln in der Regel auch ein Zittern der Hand des Bedieners wieder, weshalb eine Glättung zielführend ist. Ferner ist in vielen Fällen eine Filterung der Daten zweckmäßig, wobei insbesondere Datenpunkte mit besonders geringer oder besonders hoher Auslenkung des Messtasters wegen der bereits weiter oben diskutierten, mit diesen verbundenen hohen Unsicherheiten ganz herausgefiltert werden können oder lediglich mit geringerer Wichtung berücksichtigt werden können.

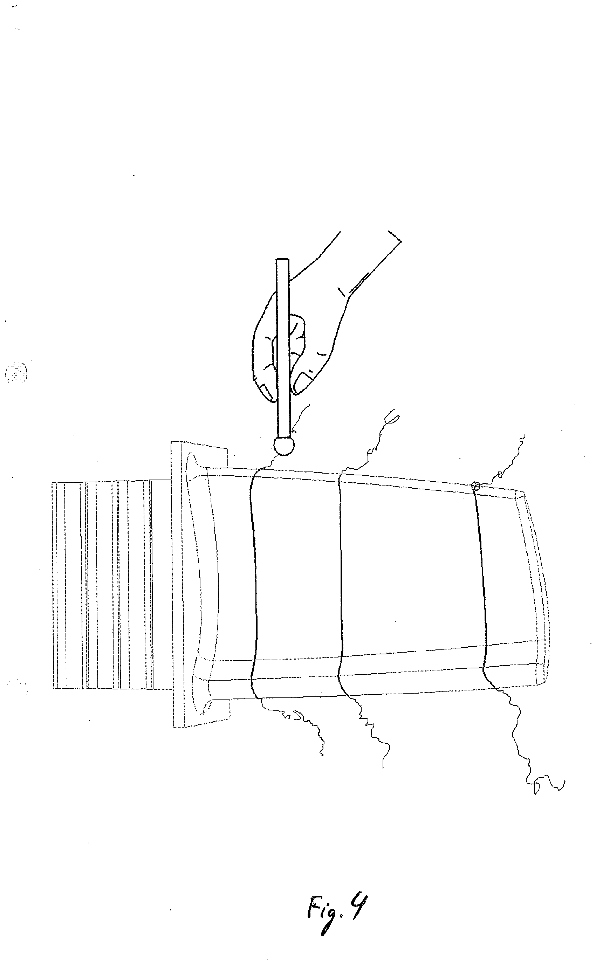

Entsprechende Aufbereitungskriterien können definiert und der Software vorgegeben werden, die dann automatisiert die Bearbeitung vornimmt. In Figur 4 sind exemplarisch die durch die Datenaufbereitung gemäß Schritt 30 erzeugten aufbereiteten 3D-Scanlinien gezeigt.

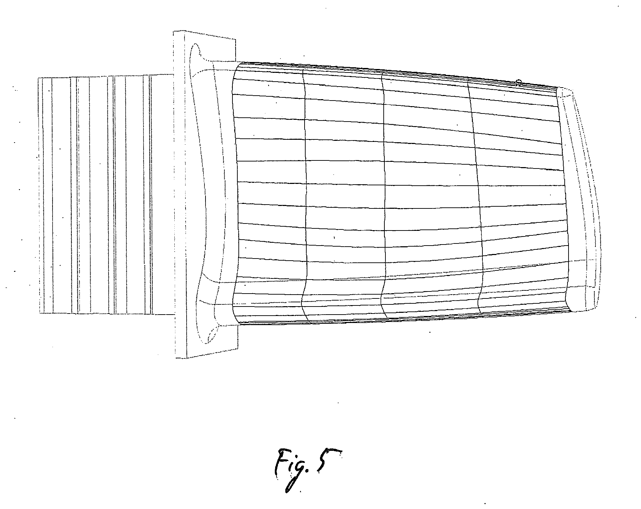

Aus diesen aufbereiteten 3D-Scanlinien wird dann -beispielsweise mittels der üblichen, kommerziell erhältlichen und beispielsweise als Bestandteil der Multigrind^{®} Horizon -Software der Anmelderin realisierten CAD-Routinen- im Schritt 40 ein 3D-Modell der Fläche erzeugt, das in Figur 5 dargestellt ist. Dieses Modell zeigt keine augenfälligen Flächenfehler mehr; es zeigt sich aber, dass es im Regelfall noch keine ausreichend gute Basis für die automatisierte Bearbeitung des Werkstücks liefert. Dies liegt insbesondere daran, dass bei der Filterung des handgeführten 3D-Linienscans gerade an Stellen des Werkstücks, an denen starke Änderungen im realen Oberflächenverlauf des Werkstücks vorliegen, Datenpunkte nicht berücksichtigt werden und dementsprechend die Oberfläche hier nicht richtig abgebildet wird.

Es ist also nötig, ein Qualitätskriterium zu definieren, das die Qualität des 3D-Modells insbesondere auch vor dem Hintergrund der durch die Datenaufbereitung vorgenommenen Eingriffe, insbesondere der Filterung aber auch der Auswirkungen der Glättung, bewertet, wie es im Schritt 50 erfolgt.

Wenn die Qualität gemäß dieser Bewertung unzureichend scheint, muss ein weiterer, qualitativ hochwertigerer 3D-Linienscan-Datensatz bereitgestellt werden.

Anzumerken ist, dass dies in der Praxis ist bei einem auf aufbereiteten handgeführten 3D-Linienscandaten basierenden 3D-Modell wegen der dabei notwendigen starken Eingriffe bei der Datenaufbereitung stets der Fall, so dass für ein 3D-Modell, das auf einem durch Aufbereitung der mit einem Handscan gewonnenen Daten erzeugten Datensatz 2 beruht, eigentlich auch der Schritt 50 übersprungen und direkt mit Schritt 60 weitergemacht werden kann. Er ist also eigentlich nur für die Überprüfung der Qualität von 3D-Modellen, die auf einem durch Aufbereitung des Datensatz 3, der bei einem maschinellen Scan gewonnen wurde, erzeugten Datensatz 3` beruhen nötig.

Dies verdeutlicht, dass man also mit der Datenaufbereitung im Schritt 30 eigentlich sehenden Auges einen im ersten Zugriff möglicherweise kontraproduktiv erscheinenden Eingriff in die Daten durchführt, weil man nach der Auwendung der Datenaufbereitung auf mit einem Handscan gewonnene Daten nur noch in Ausnahmefällen davon ausgehen kann, dass die Bauteilgeometrie noch hinreichend präzise wiedergeben werden und das entsprechend gewonnene 3D-Modell hinreichend gute Qualität für die Bearbeitung erreicht.

Es zeigt sich aber überraschenderweise, dass diese Geometrie dennoch eine hinreichend gute Basis ist, um sinnvolle Scanlinien für einen automatisierten 3D-Linienscan zu erzeugen, mit dem man sich dann der wahren Oberflächenform annähert.

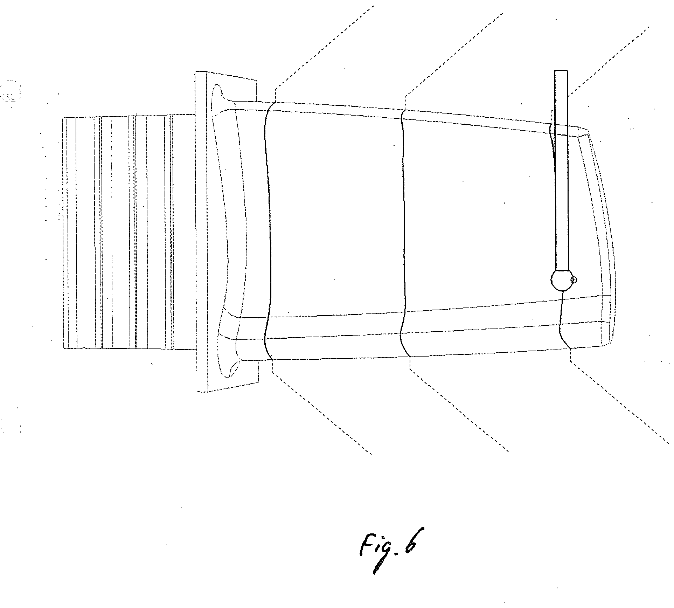

Die Bereitstellung dieses weiteren, qualitativ hochwertigeren 3D-Linienscan-Datensatz geschieht konkret dadurch, dass im Schritt 60 basierend auf dem nun vorliegenden 3D-Modell der Oberfläche mittels NC-Code, der beispielsweise in der Multigrind^{®} Horizon -Software der Anmelderin generiert wird, Scan-Pfade für einen nachfolgend im Schritt 70 von der Werkzeugmaschine automatisch durchgeführten 3D-Linienscan definiert werden, der zu einem dritten 3D-Linienscan-Datensatz führt. Diese Scanpfade sind in Figur 6 exemplarisch gezeigt.

Auch dieser Datensatz wird bevorzugt durch erneute Anwendung des Schritts 30 aufbereitet, um einen aufbereiteten Datensatz 3' zu erzeugen, aus dem im Schritt 40 ein 3D-Modell des Werkstücks erzeugt wird, zu dem dann im Schritt 50 eine Qualitätsprüfung vorgenommen wird.

Da das Ergebnis des automatischen 3D-Linienscans die Zitterbewegung des händischen Scans nicht aufweist, ist in der Regel eine schwächere Glättung erforderlich, so dass es zu geringeren Mittelungseffekten bei der Wiedergabe von Oberflächenstrukturen kommt. Auch die Zahl der wegen sehr starker oder sehr geringer Auslenkung des Messtasters herauszufilternden, mit hoher Unsicherheit behafteten Datenpunkte wird dabei in der Regel geringer, da diese einerseits durch die viel gleichmäßigere maschinelle Bewegung reduziert wird und andererseits bei der Erstellung der Scanpfade im Schritt 60 die Eingriffe in den Datensatz berücksichtigt werden können.

So kann z.B. bei starken Änderungen der Oberflächenkontur, die im Ausgangsmodell bereits erkennbar sind und/oder an Stellen, an denen eine Vielzahl von Punkten bei der Datenaufbereitung stark manipuliert oder entfernt wurden die Dichte der gescannten Punkte angepasst werden.

Dementsprechend zeigt sich, dass die Wahrscheinlichkeit, dass das neue Modell den Qualitätstest des Schritts 50 besteht, bereits nach dem ersten automatischen 3D-Linienscan erheblich ist, und zwar auch für die aufbereiteten Daten, da die Aufbereitung in diesem Fall regelmäßig nicht mehr so stark in die Daten eingreift. Falls die erreichte Qualität trotzdem noch nicht ausreicht, wird eine weitere Sequenz der Schritte 60,70,30,40,50 ausgeführt, bis der Qualitätstest im Schritt 50 bestanden wird.

Ist dies schließlich der Fall, kann die automatisierte Bearbeitung des Werkstücks durch die Werkzeugmaschine im Schritt 80 beginnen, deren Abschluss das Ende 100 des Verfahrens bildet .

### Bezugszeichenliste

- 1: Start
- 10: Aufspannen des Werkstücks
- 20: Durchführen eines handgeführten 3D-Linienscans
- 30: Aufbereiten des Datensatzes
- 40: Erzeugen einer 3D-CAD-Fläche
- 50: Qualitätsprüfung
- 60: Erzeugen von Scan-Pfaden für automatischen 3D-Linienscan
- 70: Durchführen eines automatischen 3D-Linienscans
- 80: Automatisierte Bearbeitung des Werkstücks
- 100: Ende

## Patentansprüche

1. Verfahren zur Bearbeitung von Werkstücken mit unbekannter Werkstückgeometrie mit einer Werkzeugmaschine mit den Schritten
- Aufspannen (10) des Werkstücks auf einer Aufspannvorrichtung der Werkzeugmaschine,
- Durchführen (20) eines handgeführten 3D-Linienscans mit einem Messtaster innerhalb der Werkzeugmaschine zur Erfassung der Werkstückgeometrie in einem ersten Datensatz durch eine manuelle Bewegung des Messtasters, bei dem ein Maschinenbediener den Messtaster in die Hand nimmt und ihn in die Richtung des ersten Aufsatzpunktes auslenkt,
- Aufbereiten (30) des ersten Datensatzes zur Kompensation von Fehlern des handgeführten 3D-Linienscans, um einen zweiten Datensatz zu erhalten
- Verwenden des zweiten Datensatzes für eine 3D-CAD-Flächenerzeugung zur Erzeugung (40) einer groben Bauteilgeometrie,
- Verwenden der groben Bauteilgeometrie zum Erzeugen (60) von Scanpfaden für einen automatischen 3D-Linienscan,
- Durchführen (70) eines automatischen 3D-Linienscans des Werkstücks mit dem Messtaster innerhalb der Werkzeugmaschine, um einen dritten Datensatz zu erhalten,
- Verwenden des dritten Datensatzes für eine 3D-CAD-Flächenerzeugung zur Erzeugung (40) einer genauen Bauteilgeometrie, und
- Automatisierte Bearbeitung (80) des Werkstücks durch die Werkzeugmaschine basierend auf der genauen Bauteilgeometrie.

2. Verfahren nach Anspruch 1,
wobei vor dem Verwenden des dritten Datensatzes zur Erzeugung einer genauen Bauteilgeometrie eine Qualitätsprüfung (50) des dritten Datensatzes und/oder der daraus erzeugten 3D-CAD-Fläche vorgenommen wird und bei unzureichender Qualität des dritten Datensatzes dieser verbessert wird.

3. Verfahren nach Anspruch 2,
wobei zur Verbesserung ein Aufbereiten (30) des dritten Datensatzes erfolgt und/oder eine iterative Verbesserung des dritten Datensatzes durchgeführt wird, indem die durch 3D-CAD-Flächenerzeugung des vorliegenden dritten Datensatzes gewonnene Bauteilgeometrie zur Durchführung eines erneuten automatisierten 3D-Scans (70) verwendet wird, mit dem ein verbesserter dritter Datensatz erzeugt wird.

4. Verfahren nach einem der Ansprüche 1 bis 3,
wobei beim Durchführen (20) des handgeführten 3D-Scans eine oder mehrere Linien auf dem aufgespannten Werkstück mit dem Messtaster abgefahren werden und zeitgleich die Messdaten aufgenommen werden.

5. Verfahren nach einem der Ansprüche 1 bis 4,
wobei beim Durchführen des handgeführten 3D-Scans (20) durch eine manuelle Bewegung des Messtasters eine adaptive Nachführung durch die Werkzeugmaschine erfolgt, bei der die relative Position des Werkstücks zum Messtaster durch Änderung der Position der Aufspannvorrichtung und/oder Änderung der Position des an der Werkzeugmaschine angeordneten Messtasters geändert wird.

6. Verfahren nach Anspruch 5,
wobei bei der adaptiven Nachführung des Werkstücks durch die Werkzeugmaschine die Auslenkung des Messtasters in Echtzeit überwacht und zur Regelung der Verfahrgeschwindigkeit des Werkstücks durch die Werkzeugmaschine verwendet wird.

7. Verfahren nach einem der Ansprüche 1 bis 6,
wobei zum Aufbereiten (30) eines Datensatzes, insbesondere zum Aufbereiten (30) des ersten Datensatzes aus dem handgeführten 3D-Scans zum Erhalten des zweiten Datensatzes, zur Kompensation von Fehlern eines 3D-Scans eine Glättung, eine Entfernung von fehlerhaften Messwerten, eine Prüfung auf physikalische Plausibilität der Messdaten oder eine Kombination dieser Maßnahmen durchgeführt wird.

8. Werkzeugmaschine zur Bearbeitung von Werkstücken unbekannter Werkstückgeometrie mit einer Aufspannvorrichtung für ein Werkstück und mit mindestens einer durch eine Steuerung angesteuerten Achse zur Bearbeitung eines auf der Aufspannvorrichtung aufgespannten Werkstücks,
wobei die Werkzeugmaschine einen Messtaster aufweist, der für die Durchführung eines manuellen 3D-Scans des auf der Aufspannvorrichtung aufgespannten Werkstücks durch manuelle Bewegung des Messtasters, und für die Durchführung mindestens eines automatischen, durch die Steuerung gesteuerten Scans eingerichtet ist, wobei die Steuerung derart programmiert und/oder eingerichtet ist, dass mit ihr ein Verfahren mit den Schritten
Empfangen eines ersten Datensatzes, der durch Durchführen (20) eines handgeführten 3D-Linienscans mit dem Messtaster innerhalb der Werkzeugmaschine zur Erfassung der Werkstückgeometrie des auf der Aufspanneinrichtung der Werkzeugmaschine aufgespannten Werkstücks erzeugt wird, bei dem ein Maschinenbediener den Messtaster in die Hand nimmt und ihn in die Richtung des ersten Aufsatzpunktes auslenkt,
- Aufbereiten (30) des ersten Datensatzes zur Kompensation von Fehlern des handgeführten 3D-Linienscans, um einen zweiten Datensatz zu erhalten,
- Verwenden des zweiten Datensatzes für eine 3D-CAD-Flächenerzeugung durch die Werkzeugmaschine zur Erzeugung (40) einer groben Bauteilgeometrie,
- Verwenden der groben Bauteilgeometrie zum Erzeugen (60) von Scanpfaden für einen automatischen 3D-Linienscan,
- Durchführen (70) eines automatischen 3D-Linienscans des Werkstücks mit dem Messtaster innerhalb der Werkzeugmaschine, um einen dritten Datensatz zu erhalten,
- Verwenden des dritten Datensatzes für eine 3D-CAD-Flächenerzeugung durch die Werkzeugmaschine zur Erzeugung (40) einer genauen Bauteilgeometrie, und
- Automatisierte Bearbeitung (100) des Werkstücks durch die Werkzeugmaschine basierend auf der genauen Bauteilgeometrie
durchgeführt wird.

9. Werkzeugmaschine nach Anspruch 8,
wobei die Steuerungsvorrichtung derart programmiert und eingerichtet ist, dass beim Durchführen eines manuellen 3D-Scans mit dem Messtaster eine adaptive Nachführung durch die Werkzeugmaschine erfolgt, bei der die relative Position des Werkstücks zum Messtaster durch Änderung der Position der Aufspannvorrichtung und/oder Änderung der Position des an der Werkzeugmaschine angeordneten Messtasters geändert wird.

10. Werkzeugmaschine nach Anspruch 9,
wobei Mittel zur Überwachung der Position des Messtasters im Raum in Echtzeit vorhanden sind und dass die Steuerungsvorrichtung derart programmiert und eingerichtet ist, dass basierend auf den bei dieser Echtzeitüberwachung gewonnenen Daten die Geschwindigkeit der adaptiven Nachführung geregelt wird.

## Claims

1. Method for machining workpieces with unknown workpiece geometry, using a machine tool and having the steps
- clamping (10) the workpiece onto a clamping device of the machine tool,
- conducting (20) a hand guided 3D line scan inside the machine tool using a measuring probe in order to record the workpiece geometry in a first data set by means of a manual movement of the measuring probe, during which a machine operator takes the measuring probe and deflects it in the direction of the first starting point,
- preparing (30) the first data set for the compensation of errors in the hand guided 3D line scan in order to obtain a second data set,
- using the second data set for a 3D CAD surface generation to generate (40) a course component geometry,
- using the course component geometry to generate (60) scan paths for an automatic 3D line scan,
- conducting (70) an automatic 3D line scan of the workpiece inside the machine tool using the measuring probe to obtain a third data set,
- using the third data set for a 3D CAD surface generation to generate (40) an exact component geometry, and
- automated machining (80) of the workpiece by means of the machine tool based on the exact component geometry.

2. Method in accordance with claim 1,
wherein, before using the third data set to generate an exact component geometry, a quality test (50) of the third data set and/or of the therefrom generated 3D CAD surface is carried out and if the quality of the third data set is insufficient, it is improved.

3. Method in accordance with claim 2,
wherein, for the improvement, a preparation (30) of the third data set is carried out and/or an iterative improvement of the third data set is performed by using the component geometry obtained by means of the 3D CAD surface generation of the present third data set while carrying out a new automated 3D scan (70) to produce an improved data set.

4. Method in accordance with any of claims 1 to 3,
wherein, while conducting the hand guided 3D scan, one or more lines on the clamped workpiece are followed with the measuring probe and the measuring data is recorded simultaneously.

5. Method in accordance with any of claims 1 to 4,
wherein, while conducting the hand guided 3D scan (20), an adaptive tracking is carried out by the machine tool, during which the relative position of the workpiece to the measuring probe is changed by changing the position of the clamping device and/or by changing the position of the measuring probe arranged on the machine tool.

6. Method in accordance with claim 5,
wherein, during the adaptive tracking of the workpiece by the machine tool, the deflection of the measuring probe is monitored in real time and is used to adjust the travel speed of the workpiece through the machine tool.

7. Method in accordance with any of claims 1 to 6,
wherein, for the preparation (30) of a data set, in particular, for the preparation (30) of the first data set from the hand guided scan to obtain the second data set, a smoothing, a deletion of false measuring data, a test for physical plausibility of the measuring data or a combination of these measures is carried out.

8. Machine tool for machining workpieces with unknown workpiece geometry, having a clamping device for a workpiece and having at least one axis controlled by a controller for machining a workpiece clamped on the clamping device,
wherein the machine tool comprises a measuring probe which is implemented for the performance of a manual 3D scan of the workpiece clamped on the clamping device by means of the manual movement of the measuring probe and for the performance of at least one automatic scan, controlled by the controller, wherein the controller is programmed and/or implemented such that a method comprised of the following steps is carried out,
- receiving a first data set, which is generated by conducting (20) a hand guided 3D line scan with the measuring probe inside the machine tool in order to determine the workpiece geometry of the workpiece clamped on the clamping device, during which a machine operator takes the measuring probe and deflects it in the direction of the first starting point,
- preparing (30) the first data set for the compensation of errors in the hand guided 3D line scan in order to obtain a second data set,
- using the second data set for a 3D CAD surface generation to generate (40) a course component geometry,
- using the course component geometry to generate (60) scan paths for an automatic 3D line scan,
- conducting (70) an automatic 3D line scan of the workpiece inside the machine tool using the measuring probe to obtain a third data set,
- using the third data set for a 3D CAD surface generation to generate (40) an exact component geometry, and
- automated machining (80) of the workpiece by means of the machine tool based on the exact component geometry.

9. Machine tool in accordance with claim 8,
wherein the control device is programmed and implemented such that, while conducting the hand guided 3D scan (20), an adaptive tracking is carried out by the machine tool, during which the relative position of the workpiece to the measuring probe is changed by changing the position of the clamping device and/or by changing the position of the measuring probe arranged on the machine tool.

10. Machine tool in accordance with claim 9,
wherein means for monitoring the position of the measuring probe within the space in real time are provided and in that the control device is programmed and implemented such that the speed of the adaptive tracking is adjusted based on the data gathered during this real-time monitoring.

## Revendications

1. Procédé d'usinage de pièces à géométrie inconnue avec une machine-outil comprenant les étapes consistant à :
- fixer (10) la pièce à un dispositif de fixation de la machine-outil,
- effectuer (20) un balayage linéaire 3D à guidage manuel avec un palpeur dans la machine-outil pour saisir la géométrie de la pièce par un premier jeu de données par déplacement manuel du palpeur, l'opérateur tenant le palpeur à la main et le guidant en direction d'un premier point d'application,
- préparer (30) le premier jeu de données pour compenser les défauts du balayage linéaire 3D manuel pour obtenir un second jeu de données,
- utiliser le second jeu de données pour générer une surface 3D-CAD pour générer (40) une géométrie grossière de la pièce,
- utiliser la géométrie grossière de la pièce pour générer (60) des chemins de balayage pour un balayage linéaire 3D automatique,
- effectuer (70) un balayage linéaire 3D automatique de la pièce avec le palpeur dans la machine-outil pour obtenir un troisième jeu de données,
- utiliser le troisième jeu de données pour générer une surface 3D-CAD pour générer (40) une géométrie précise de la pièce, et
- usiner automatiquement (80) la pièce avec la machine-outil en se fondant sur la géométrie précise de la pièce,

2. Procédé selon la revendication 1,
selon lequel
avant d'utiliser le troisième jeu de données pour générer la géométrie précise de la pièce, on effectue un contrôle de qualité (50) du troisième jeu de données et/ou de la surface 3D-CAD générée à partir de celui-ci et en cas de qualité insuffisante du troisième jeu de données, on améliore celui-ci.

3. Procédé selon la revendication 2,
selon lequel
pour améliorer, on prépare (30) le troisième jeu de données et/ou une amélioration par itération du troisième jeu de données en utilisant la géométrie de la pièce obtenue en générant la surface 3D-CAD du troisième jeu actuel de données pour effectuer un nouveau balayage 3D automatisé (70) avec lequel on génère un troisième jeu de données, amélioré.

4. Procédé selon l'une des revendications 1 à 3,
selon lequel
en effectuant (20) le balayage 3D manuel, on parcourt avec le palpeur une ou plusieurs lignes sur la pièce fixée et simultanément on prend les données de mesure.

5. Procédé selon l'une des revendications 1 à 4,
selon lequel
effectuer le balayage 3D (20) manuel par le mouvement manuel du palpeur consiste à faire un suivi adaptatif avec la machine-outil avec laquelle on modifie la position relative de la pièce par rapport au palpeur en modifiant la position du dispositif de fixation et/ou en modifiant la position du palpeur installé sur la machine-outil.

6. Procédé selon la revendication 5,
selon lequel
dans le cas du suivi adaptatif de la pièce par la machine-outil, on surveille le débattement du palpeur en temp réel et on l'utilise pour réguler la vitesse de déplacement de la pièce par la machine-outil.

7. Procédé selon l'une des revendications 1 à 6,
selon lequel
pour préparer (30) un jeu de données notamment pour préparer (30) le premier jeu de données à partir du balayage 3D manuel pour obtenir le second jeu de données, pour compenser les défauts du balayage 3D, on lisse, on élimine les valeurs de mesure défectueuses, on vérifie la plausibilité physique des données de mesure ou une combinaison des données de mesure.

8. Machine-outil pour l'usinage de pièces à géométrie inconnue avec un dispositif de fixation de pièce et au moins un axe commandé par une commande pour l'usinage de la pièce fixée dans le dispositif de fixation,
- la machine-outil a un palpeur pour effectuer un balayage 3D manuel de la pièce fixée au dispositif de fixation par déplacement manuel du palpeur et qui est conçue pour effectuer au moins un balayage automatique commandé par la commande,
- la commande étant programmée et/ou installée pour appliquer un procédé avec les étapes suivantes :
- recevoir un premier jeu de données obtenu par l'exécution (20) d'un balayage linéaire 3D manuel avec le palpeur dans la machine-outil pour saisir la géométrie de la pièce fixée dans l'installation de fixation de la machine-outil, l'opérateur prenant le palpeur à la main et le déplaçant en direction du premier point d'application,
- préparer (30) le premier jeu de données pour compenser les défauts du balayage linéaire 3D manuel pour obtenir un second jeu de données,
- utiliser le second jeu de données pour générer une surface 3D-CAD par la machine-outil pour générer (40) une géométrie grossière de la pièce,
- utiliser la géométrie grossière de la pièce pour générer (60) des chemins de balayage pour un balayage linéaire 3D automatique,
- effectuer (70) un balayage linéaire 3D automatique de la pièce avec le palpeur dans la machine-outil pour obtenir un troisième jeu de données,
- utiliser le troisième jeu de données pour générer une surface 3D-CAD par la machine-outil pour générer (40) une géométrie précise de la pièce, et
- usiner de manière automatisée (100) la pièce avec la machine-outil en se fondant sur la géométrie précise de la pièce.

9. Machine-outil selon la revendication 8,
dans laquelle
le dispositif de commande est programmé et installé pour que l'exécution d'un balayage 3D manuel avec le palpeur, soit une poursuite adaptative par la machine-outil par laquelle la position relative de la pièce par rapport au palpeur est modifiée par modification de la position du dispositif de fixation et/ou modification de la position du palpeur de mesure installé sur la machine-outil.

10. Machine-outil selon la revendication 9,
comportant des moyens pour surveiller la position du palpeur de mesure dans l'espace en temps réel et le dispositif de commande est programmé et installé pour régler la vitesse de la poursuite adaptative en s'appuyant sur les données obtenues par cette surveillance en temps réel.
